# EUROPEAN PATENT APPLICATION

(11) **EP 4 744 941 A1**
(43) Date of publication of application: **20.05.2026**
(21) Application number: 25215581.7
(22) Date of filing: 13.11.2025
(51) Int. Cl.: B60L 15/20

(54) **BATTERY ELECTRIC VEHICLE AND NON-TRANSITORY STORAGE MEDIUM**

(30) Priority: 19.11.2024 JP 2024201727
(71) Applicant: Toyota Jidosha Kabushiki Kaisha, Toyota-shi, Aichi-ken 471-8571 (JP)
(72) Inventor: ISAMI, Yoichiro, TOYOTA-SHI, AICHI-KEN, 471-8571 (JP); YUASA, Ryohei, TOYOTA-SHI, AICHI-KEN, 471-8571 (JP); FURUHASHI, Yusuke, TOYOTA-SHI, AICHI-KEN, 471-8571 (JP)
(74) Representative: Cabinet Beau de Loménie

(57) **Abstract**

A battery electric vehicle (100) is configured to be able to switch output characteristics of an electric motor in multiple stages and includes a processor (30) that switches the output characteristics of the electric motor in accordance with a shift position, and a shifter (23) to be used by a driver to select the shift position. The processor (30) has a manual operation mode of accepting selection of the shift position through manual operation of the shifter (23). The processor (30) automatically downshifts the shift position in response to a vehicle speed or motor rotation speed satisfying a predetermined condition during traveling in the manual operation mode.

## Description

### BACKGROUND OF THE INVENTION

### 1. Field of the Invention

The present disclosure relates to a battery electric vehicle configured to be able to switch output characteristics of an electric motor in multiple stages, and more particularly, to a battery electric vehicle that travels in a manual operation mode of accepting selection of a shift position through manual operation of a shifter. Further, the present disclosure relates to a non-transitory storage medium storing instructions to be executed by an in-vehicle computer suitable for use in a battery electric vehicle including a shifter.

### 2. Description of Related Art

Japanese Patent No. 7529003 (JP 7529003 B) discloses a technology of providing a sequential shifter in a battery electric vehicle and changing output characteristics of an electric motor in multiple stages in response to operation of the sequential shifter. With the technology, a driver can enjoy driving sensations like an engine vehicle with a manual transmission in a battery electric vehicle.

### SUMMARY OF THE INVENTION

There is a large difference in motor characteristics between an engine vehicle and a battery electric vehicle. While it is difficult for an internal combustion engine that is a motor of the engine vehicle to maintain rotation with extremely low rotation, an electric motor that is a motor of the battery electric vehicle can output large torque even with extremely low rotation. Thus, the battery electric vehicle can travel while a shift position is maintained on a high speed side even at a low speed at which the engine vehicle requires downshift for maintaining an engine rotation speed.

However, there is a possibility that a driver who is used to the engine vehicle may feel a sense of discomfort if the vehicle can travel at a low speed while the shift position is maintained on a high speed side.

The present disclosure provides a battery electric vehicle and a non-transitory storage medium that can reproduce behavior of an engine vehicle in which manual transmission can be performed in the battery electric vehicle and allow a driver to get a sense of driving the engine vehicle with manual transmission.

A battery electric vehicle according to a first aspect of the present disclosure is configured to be able to switch output characteristics of an electric motor in multiple stages, and includes a processor that switches the output characteristics of the electric motor in accordance with a shift position, and a shifter to be used by a driver to select the shift position. The processor has a manual operation mode of accepting selection of the shift position through manual operation of the shifter. The processor automatically downshifts the shift position in response to a vehicle speed or a motor rotation speed satisfying a predetermined condition during traveling in the manual operation mode.

In the electric vehicle according to the first aspect of the present disclosure, the processor may be configured to upshift the shift position only in accordance with the manual operation of the shifter regardless of the vehicle speed and the motor rotation speed during traveling in the manual operation mode.

In the electric vehicle according to the first aspect of the present disclosure, the manual operation mode may include a manual upshift mode and an automatic upshift mode. The processor may be configured to upshift the shift position only in accordance with the manual operation of the shifter regardless of the vehicle speed and the motor rotation speed during traveling in the manual upshift mode, and automatically upshift the shift position in response to the vehicle speed or the motor rotation speed satisfying a predetermined condition during traveling in the automatic upshift mode.

In the electric vehicle according to the first aspect of the present disclosure, the processor may be configured to perform switching between the manual upshift mode and the automatic upshift mode in response to selection by the driver.

In the electric vehicle according to the first aspect of the present disclosure, the automatic upshift mode may include a first mode and a second mode. The processor may be configured to, upon upshift in the first mode, complete upshift in a short period of time by setting a larger torque change rate than a torque change rate upon upshift in the second mode, and upon upshift in the second mode, complete upshift while taking a longer time by setting a smaller torque change rate than a torque change rate upon upshift in the first mode.

In the electric vehicle according to the first aspect of the present disclosure, the processor may be configured to perform switching between the first mode and the second mode in response to selection by the driver.

A non-transitory storage medium according to a second aspect of the present disclosure stores instructions that is executable by one or more processors and causing the one or more processors to execute functions. The functions include switching output characteristics of an electric motor in multiple stages in accordance with a shift position, making selectable, a manual operation mode of switching the shift position in accordance with manual operation of a shifter by a driver in the battery electric vehicle , and automatically downshifting the shift position in response to a vehicle speed or a motor rotation speed satisfying a predetermined condition during traveling in the manual operation mode.

According to the present disclosure, even during traveling in the manual operation mode in which the shift position is selected by the manual operation of the shifter by the driver, when the vehicle speed or the motor rotation speed satisfies the predetermined condition, the shift position is automatically downshifted. As a result of such processing being performed, it is possible to reduce a possibility that the driver who is used to driving of an engine vehicle may feel a sense of discomfort for mismatch of the shift position and the vehicle speed and provide a sense as if the driver drove an engine vehicle with manual transmission.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view illustrating a configuration of a control system of a battery electric vehicle according to a present embodiment;
FIG. 2 is a block diagram illustrating functions of a BEV-ECU;
FIG. 3 is a view illustrating a driving mode switching method;
FIG. 4 is a flowchart of shift control to be performed in a manual operation mode;
FIG. 5 is a view illustrating a difference in display of a meter according to whether automatic downshift is executed; and
FIG. 6 is a view indicating a relationship between a speed and drive force for each shift position to be implemented by automatic downshift being executed in the manual operation mode.

### DETAILED DESCRIPTION OF EMBODIMENTS

### 1. Configuration of Control System of Battery Electric Vehicle

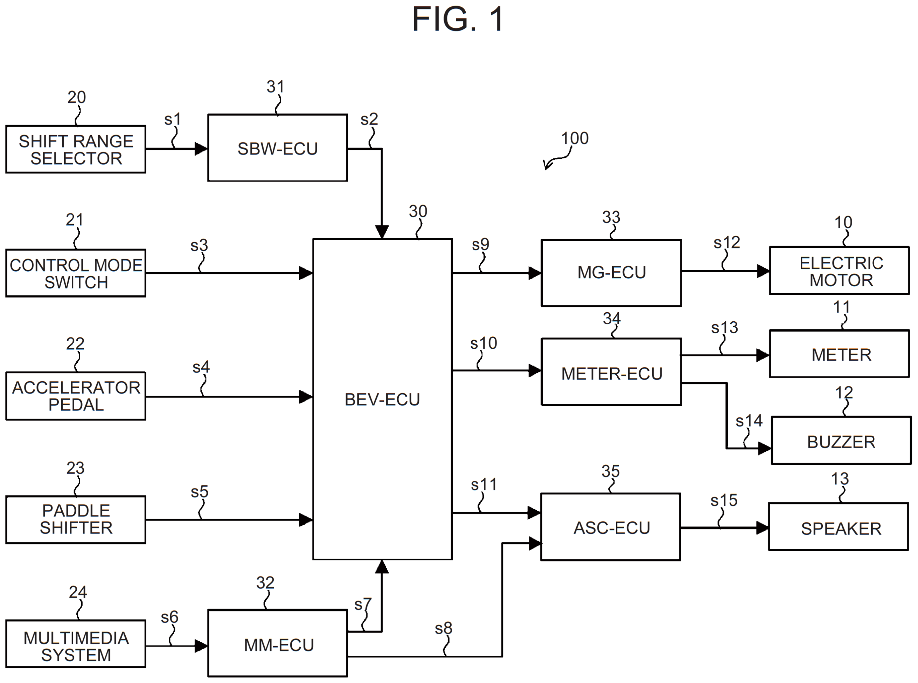

FIG. 1 is a view illustrating a configuration of a control system of a battery electric vehicle 100 according to an embodiment of the present disclosure. The battery electric vehicle 100 is a battery electric vehicle (BEV) that travels with electric energy stored in a battery. The control system of the battery electric vehicle 100 includes as control targets, an electric motor 10 that is a motor for traveling, a meter 11 that provides visual information to a driver, and a buzzer 12 and a speaker 13 that provide auditory information to the driver. Further, as a control device that controls these control targets, the battery electric vehicle 100 includes a plurality of electronic control units (ECUs) and an input device that receives inputs of instructions to the ECUs from the driver. The ECUs include a battery electric vehicle (BEV)-ECU 30, a shift by wire (SBW)-ECU 31, a multimedia (MM)-ECU 32, a motor generator (MG)-ECU 33, a meter-ECU 34, and an active sound control (ASC)-ECU 35. An input interface includes a shift range selector 20, a control mode switch 21, an accelerator pedal 22, a paddle shifter 23, and a multimedia system 24.

The shift range selector 20 is an input interface to be used by the driver to select a shift range. Selectable shift ranges include, for example, a parking range, a reverse range, a neutral range, and a drive range. If the driver operates the shift range selector 20, a signal s1 in accordance with a position of an operation member of the shift range selector 20 is output from the shift range selector 20 to the SBW-ECU 31. The SBW-ECU 31 determines the shift range based on the input signal s1 and outputs a signal s2 including information on the selected shift range to the BEV-ECU 30.

The control mode switch 21 is an input interface for switching a control mode of the battery electric vehicle 100 between an automatic control mode and a manual operation mode. The automatic control mode is a mode of controlling the electric motor 10 with normal output characteristics in response to an output request from the driver. The manual operation mode is a mode for causing the battery electric vehicle 100 to operate like an engine vehicle in which manual transmission can be performed. In the manual operation mode, the output characteristics of the electric motor 10 can be switched in multiple stages through operation of the paddle shifter 23 which will be described later. Note that the control mode switch 21 may be either an alternate switch or a momentary switch. If the driver operates the control mode switch 21, a signal s3 in accordance with the control mode specified through the operation is output from the control mode switch 21 to the BEV-ECU 30.

The accelerator pedal 22 is an input interface for acquiring a depression amount when the driver presses the accelerator pedal 22 as an acceleration request of the driver. If the driver presses the accelerator pedal 22, a signal s4 in accordance with the depression amount is output from an accelerator pedal stroke sensor to the BEV-ECU 30.

The paddle shifter 23 is an input interface including a pair of right and left paddles attached to a steering wheel or a steering column. If the driver pulls the paddle, a signal s5 corresponding to the pulled paddle is output from the paddle shifter 23 to the BEV-ECU 30. When the manual operation mode is selected, the paddle shifter 23 becomes an input interface for switching the shift position in multiple stages. However, the battery electric vehicle 100 does not include an actual transmission. The shift position described here is one of parameters of a physical model which will be described later, to be used to calculate engine torque, instead of a shift position of an actual transmission. In the manual operation mode, the signal s5 output when the right paddle is pulled is a signal that requests upshift, and the signal s5 output when the left paddle is pulled is a signal that requests downshift. On the other hand, when the automatic control mode is selected, the paddle shifter 23 becomes an input interface for switching strength of a regenerative brake in multiple stages. In the automatic control mode, the signal s5 output when the right paddle is pulled is a signal that requests to weaken the regenerative brake, and the signal s5 output when the left paddle is pulled is a signal that requests to strengthen the regenerative brake.

The multimedia system 24 is an input interface including a touch screen that displays various kinds of information such as navigation and audio settings and accepts touch operation of the driver. The driver can perform various kinds of settings to the battery electric vehicle 100 through the operation of the touch screen. If the driver operates the touch screen, a signal s6 in accordance with the operation is output from the multimedia system 24 to the MM-ECU 32. The MM-ECU 32 determines a setting requested by the driver based on the input signal s6. When the setting requested by the driver is a driving mode, the MM-ECU 32 outputs a signal s7 including information on the driving mode selected by the driver to the BEV-ECU 30. The driving mode can be set in the manual operation mode, and a driving mode that matches preference of the driver can be selected from a plurality of driving modes. When the setting requested by the driver is ON/OFF or a volume of the speaker 13, the MM-ECU 32 outputs a signal s8 including information on the ON/OFF or the volume of the speaker 13 to the ASC-ECU 35.

The BEV-ECU 30 calculates torque to be output by the electric motor 10 (hereinafter, also referred to as motor torque) based on the input signals s2, s3, s4, s5, s7. However, other than these signals, other information including at least a vehicle speed is used to calculate the motor torque. The vehicle speed is measured using a speed sensor provided in each wheel. The BEV-ECU 30 calculates the motor torque using a method in accordance with the control mode specified by the signal s3. In the automatic control mode, the BEV-ECU 30 calculates the motor torque mainly based on the signal s4 and the vehicle speed. In the manual operation mode, the BEV-ECU 30 calculates the motor torque mainly based on the signals s4, s5, s7 and the vehicle speed. The calculation method of the motor torque in each control mode will be described in detail later. The BEV-ECU 30 outputs a signal s9 including information on the motor torque obtained through the calculation to the MG-ECU 33. The MG-ECU 33 generates a signal s12 for performing PWM control of the electric motor 10 based on the signal s9 and controls the electric motor 10 by the signal s12.

The BEV-ECU 30 outputs a signal s10 including information to be displayed at the meter 11 and a buzzer ringing request to the meter-ECU 34. The information to be displayed at the meter 11 includes, for example, the selected control mode, the shift position when the manual operation mode is selected, and a virtual engine rotation speed. The virtual engine rotation speed is one of parameters of the physical model to be used to calculate the motor torque in the manual operation mode. The meter-ECU 34 generates a signal s13 for displaying these kinds of information and controls the meter 11 by the signal s13. The buzzer ringing request is, for example, output to notify the driver of a timing of downshift or upshift. When the signal s10 includes the buzzer ringing request, the meter-ECU 34 generates a signal s14 and causes the buzzer 14 to ring by the signal s14.

The BEV-ECU 30 outputs a signal s11 including information to be used to generate pseudo engine sound to the ASC-ECU 35. The pseudo engine sound is sound that simulates exhaust sound of an engine vehicle emitted from the speaker 13 when the manual operation mode is selected. The information to be used to generate the pseudo engine sound includes, for example, the virtual engine rotation speed, virtual engine torque, and a virtual shift position. The virtual engine torque is one of the parameters of the physical model to be used to calculate the motor torque in the manual operation mode. The ASC-ECU 35 generates a signal s15 that generates the pseudo engine sound based on these kinds of information and controls the speaker 13 by the signal s15.

### 2. Functions of BEV-ECU

Functions of the BEV-ECU 30 will be described next. The BEV-ECU 30 includes at least a processor (processing circuit) and a memory. The memory includes a RAM that temporarily records data and a ROM that stores programs that are executable in the processor and various pieces of data relating to the programs. Each program includes a plurality of instructions. The processor reads the programs and the data from the memory, executes the programs and the data and generates the signal s9 to be output to the MG-ECU 33, the signal s10 to be output to the meter-ECU 34, and the signal s11 to be output to the ASC-ECU 35.

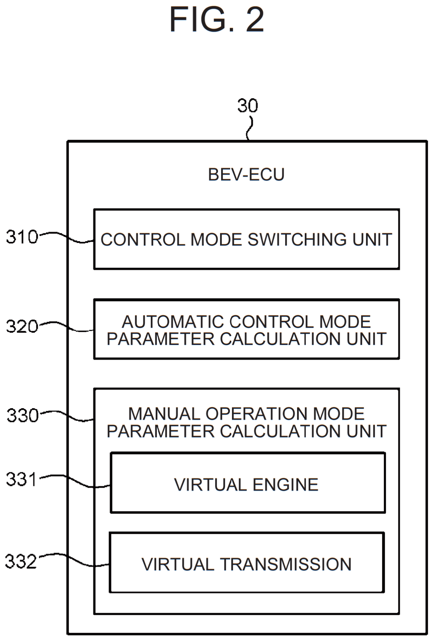

FIG. 2 is a block diagram illustrating the functions of the BEV-ECU 30. The BEV-ECU 30 has functions as a control mode switching unit 310, an automatic control mode parameter calculation unit 320, and a manual operation mode parameter calculation unit 330. These functions are implemented by the processor executing one or more programs stored in the memory of the BEV-ECU 30.

The control mode switching unit 310 switches a mode of output control of the electric motor 10 with respect to an operation input from the driver. The modes to which the control mode can be switched by the control mode switching unit 310 are the automatic control mode and the manual operation mode described above. The control mode switching unit 310 switches the control mode in accordance with the signal s3 input from the control mode switch 21.

When the control mode is switched to the automatic control mode by the control mode switching unit 310, the BEV-ECU 30 functions as the automatic control mode parameter calculation unit 320. The automatic control mode parameter calculation unit 320 performs output control in accordance with the shift range selected by the shift range selector 20. For example, when the selected shift range is a D range, the automatic control mode parameter calculation unit 320 acquires an accelerator operation amount from the signal s4 of the accelerator pedal 22 and acquires a vehicle speed from a signal of a speed sensor (not illustrated). The automatic control mode parameter calculation unit 320 has a motor torque map including the accelerator operation amount and the vehicle speed as parameters. The automatic control mode parameter calculation unit 320 calculates motor torque to be generated by the electric motor 10 by inputting the accelerator operation amount and the vehicle speed to the motor torque map and outputs the signal s9 including information on the calculated motor torque to the MG-ECU 33.

When the control mode is switched to the manual operation mode by the control mode switching unit 310, the BEV-ECU 30 functions as the manual operation mode parameter calculation unit 330. The manual operation mode parameter calculation unit 330 executes processing of calculating drive wheel torque to be generated at the drive wheel and processing of calculating motor torque based on the drive wheel torque.

The manual operation mode parameter calculation unit 330 calculates the drive wheel torque using a physical model of an engine vehicle. The physical model includes a virtual engine 331 obtained by modeling the engine, and a virtual transmission 332 obtained by modeling a transmission for which manual transmission can be performed. Note that the virtual transmission 332 includes a model of an automated clutch.

In the virtual engine 331, a relationship between a virtual engine rotation speed and virtual engine torque is specified for each accelerator operation amount. The rotation speed-torque characteristics of the virtual engine 331 can be set as characteristics assuming a gasoline engine or can be set as characteristics assuming a diesel engine. Further, the rotation speed-torque characteristics can be set as characteristics assuming a naturally aspirated engine, or can be set as characteristics assuming a supercharged engine. The virtual engine rotation speed is calculated based on a virtual gear ratio calculated at the virtual transmission 332, a virtual deceleration ratio from the virtual transmission 332 to the drive wheel, and the vehicle speed. The virtual engine torque calculated at the virtual engine 331 is input to the virtual transmission 332.

In the virtual transmission 332, the virtual gear ratio is set for each shift position. For example, when there are shift positions from a first gear to a sixth gear, a largest virtual gear ratio is set for the first gear, and the virtual gear ratio is set smaller in order of the second gear, the third gear, the fourth gear, the fifth gear, and the sixth gear. The virtual transmission torque is calculated using the virtual gear ratio calculated at the virtual transmission 332 and the virtual engine torque input from the virtual engine 331. The manual operation mode parameter calculation unit 330 calculates the drive wheel torque from the virtual transmission torque and the deceleration ratio.

The manual operation mode parameter calculation unit 330 calculates motor torque by multiplying the drive wheel torque by an actual deceleration ratio from an output shaft of the electric motor 10 to the drive wheel and outputs the signal s9 including information on the calculated motor torque to the MG-ECU 33. However, when the battery electric vehicle 100 includes the electric motors 10 respectively at a front wheel side and a rear wheel side, the manual operation mode parameter calculation unit 330 calculates motor torque of a front electric motor based on a torque distribution of the drive wheel torque to the front wheel and calculates motor torque of a rear electric motor based on a torque distribution of the drive wheel torque to the rear wheel.

### 3. Driving Mode and Driving Mode Switching Method

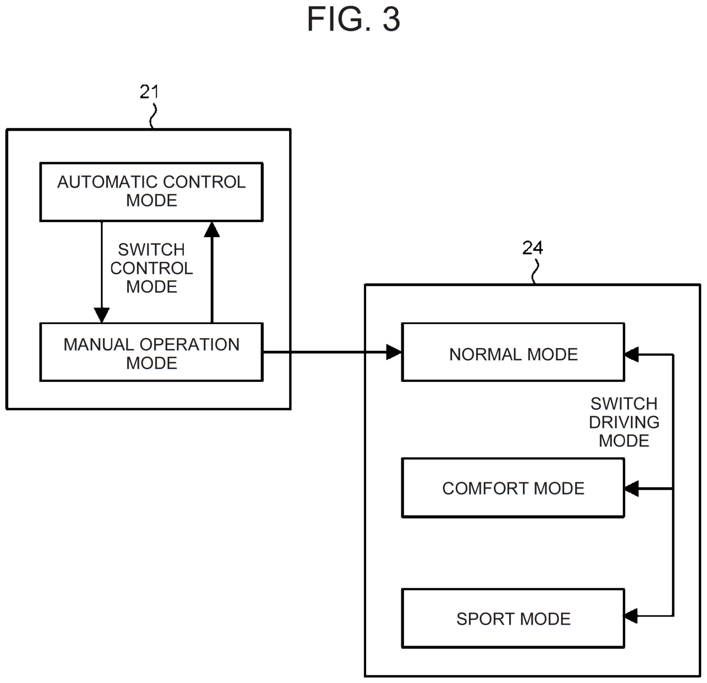

The battery electric vehicle 100 includes the automatic control mode and the manual operation mode as the control mode and further includes a plurality of driving modes that can be set in the manual operation mode. FIG. 3 is a view illustrating a relationship between the control mode and the driving mode and a driving mode switching method by the driver.

First, the driving mode is vehicle settings that is switched to optimize behavior of the battery electric vehicle 100 as the engine vehicle in accordance with preference of the driver. In the present embodiment, three driving modes of a normal mode, a comfort mode and a sport mode are prepared. The normal mode is a standard driving mode, and, for example, emphasis is placed on balance of fuel efficiency, comfortability and performance. The comfort mode is a driving mode in which emphasis is placed on ride quality, and, for example, soft suspension and steering are set. The sport mode is a driving mode in which emphasis is placed on response, and, for example, accelerator response is increased, and sensitive steering response is set. Further, as will be described later, shift control in the manual operation mode is changed in accordance with the driving mode.

The driving mode can be selected when the manual operation mode is selected through operation of the control mode switch 21. When the manual operation mode is selected, the driving mode can be selected on the touch screen of the multimedia system 24. A default driving mode when the control mode is switched from the automatic control mode to the manual operation mode is the normal mode. The driver can switch the driving mode among the normal mode, the comfort mode and the sport mode by performing touch operation on the touch screen.

### 4. Shift Control in Manual Operation Mode

The manual operation mode is a mode in which the driver can enjoy driving sensations like the engine vehicle in which manual transmission can be performed by operating himself/herself the paddle shifter 23 to switch the shift position. However, due to the output characteristics of the electric motor 10, the battery electric vehicle 100 can travel while the shift position is maintained even in a situation where downshift is required in a case of the engine vehicle. If the vehicle can travel at a low speed while the shift position is maintained on a high speed side, the driver who is used to the engine vehicle may feel a sense of discomfort. Thus, in the present embodiment, to suppress unnaturalness of behavior as the engine vehicle due to a difference in output characteristics between the electric motor 10 and the internal combustion engine, the BEV-ECU 30 executes the following shift control in the manual operation mode.

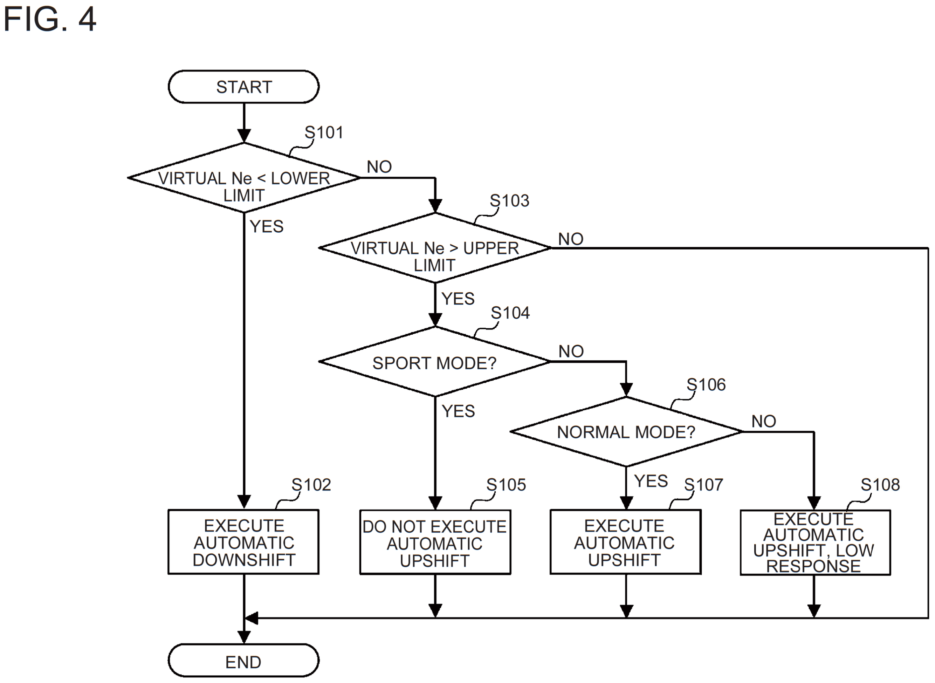

FIG. 4 is a flowchart of shift control to be executed by the BEV-ECU 30 in the manual operation mode. The BEV-ECU 30 repeatedly executes routine indicated in the flowchart with a constant control period.

In step S101, it is determined whether the virtual engine rotation speed (virtual Ne) is lower than a predetermined lower limit. The lower limit of the virtual engine rotation speed is set at a lower limit of an engine rotation speed at which a general engine can maintain combustion, for example, around an engine rotation speed at which knocking starts to occur. The virtual engine rotation speed calculated using the virtual engine 331 and the virtual transmission 332 depends on the vehicle speed, and there is a fixed relationship between the vehicle speed and the motor rotation speed. Thus, the determination in step S101 is equivalent to determination as to whether the vehicle speed is lower than a predetermined lower limit or determination as to whether the motor rotation speed is lower than a predetermined lower limit. However, when the determination is performed using the vehicle speed or the motor rotation speed instead of the virtual engine rotation speed, the lower limit is set for each shift position.

When the determination result in step S101 is Yes, the processing proceeds to step S102. The manual operation mode is a mode in which output control of the electric motor 10 is left to the driver, and thus, basically, upshift and downshift are implemented by the driver himself/herself operating the paddle shifter 23. However, in step S102, automatic downshift of the shift position is executed. The automatic downshift is performed so as to increase the virtual engine rotation speed to be equal to or higher than the lower limit. Thus, the shift position after the automatic downshift depends on the vehicle speed. After execution of step S102, the present routine ends once.

When the determination result in step S101 is No, the processing proceeds to step S103. In step S103, it is determined whether the virtual engine rotation speed is equal to or higher than a predetermined upper limit. The upper limit of the virtual engine rotation speed is set in accordance with a revolution limit of a general engine. While automatic downshift is performed regardless of the currently selected driving mode when the virtual engine rotation speed becomes lower than the lower limit, the processing is changed in accordance with the currently selected driving mode when the virtual engine rotation speed becomes higher than the upper limit. Note that in a similar manner to the determination in step S101, the determination may be performed using the vehicle speed or the motor rotation speed instead of the virtual engine rotation speed. When the determination result in step S103 is No, the present routine ends once.

When the determination result in step S103 is Yes, the processing proceeds to step S104. In step S104, it is determined whether the currently selected driving mode is the sport mode. When the sport mode is selected, the processing proceeds to step S105. The sport mode is a manual upshift mode. During traveling in the manual upshift mode, upshift is left to operation of the paddle shifter 23 by the driver himself/herself regardless of the virtual engine rotation speed or regardless of the vehicle speed and the motor rotation speed. This enables the driver to continuously obtain driving sensations as if the driver drove the engine vehicle in which manual transmission can be performed. After execution of step S105, the present routine ends once.

When the determination result in step S104 is No, that is, when the currently selected driving mode is not the sport mode, the processing proceeds to step S106. In step S106, it is determined whether the currently selected driving mode is the normal mode. When the normal mode is selected, the processing proceeds to step S107. The normal mode is an automatic upshift mode. During traveling in the automatic upshift mode, automatic upshift of the shift position is executed in response to the condition in step S103 being satisfied. The automatic upshift is performed so as to decrease the virtual engine rotation speed to be equal to or lower than the revolution limit. After execution of step S107, the present routine ends once.

When the determination result in step S106 is No, that is, when the currently selected driving mode is the comfort mode, the processing proceeds to step S108. The comfort mode is the automatic upshift mode that is the same as the normal mode. The normal mode is a first mode of the automatic upshift mode, and the comfort mode is a second mode of the automatic upshift mode. Shift response of the automatic upshift in the comfort mode is suppressed to be lower than shift response of the automatic upshift in the normal mode. Specifically, compared to the automatic upshift in the normal mode, a period required for switching the shift position is set longer, and a torque change rate before and after switching of the shift position is suppressed to be low. After execution of step S108, the present routine ends once.

### 5. Effects

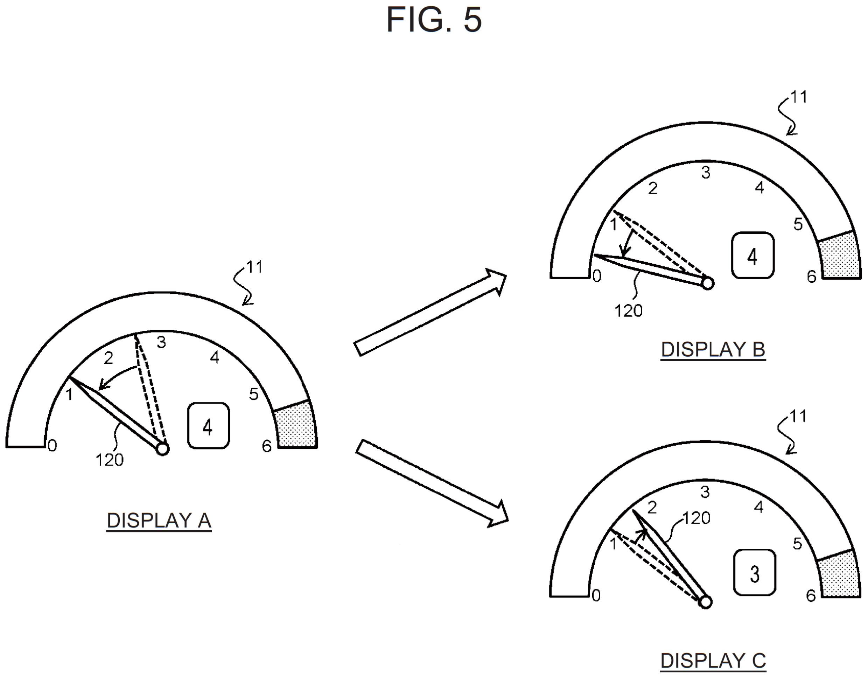

Effects obtained by the shift control described above being executed by the BEV-ECU 30, particularly, effects obtained by automatic downshift being executed will be described using FIG. 5. FIG. 5 is a view illustrating a difference in display of the meter 11 according to whether automatic downshift is executed. The virtual engine rotation speed and the shift position are displayed at the meter 11. A needle 120 of the meter 11 indicates the virtual engine rotation speed, and a unit of a scale is 1000 rpm. Numbers within a window of the meter 11 indicate the shift positions.

Display A is display of the meter 11 when the vehicle decelerates while the shift position is in the fourth gear, and the virtual engine rotation speed indicated by the needle 120 falls below the lower limit (for example, 1200 rpm). Further, display of the meter 11 when automatic downshift is not performed in that state is display B, and display of the meter 11 when automatic downshift is performed immediately after that is display C.

When automatic downshift is not performed, as illustrated in display B, the virtual engine rotation speed indicated by the needle 120 further decreases and becomes lower than the lower limit while the fourth gear is displayed at the meter 11 as the shift position. In a case of the engine vehicle, it is no wonder that an engine stall may occur in this situation, but the battery electric vehicle 100 using the electric motor 10 as a drive source can travel without any trouble even in such a situation. However, the driver who is used to driving of the engine vehicle feels a sense of discomfort for mismatch between display of the shift position and display of the virtual engine rotation speed.

On the other hand, when automatic downshift is performed, as illustrated in display C, the shift position displayed at the meter 11 is changed from the fourth gear to the third gear, and the virtual engine rotation speed indicated by the needle 120 is returned to the rotation speed higher than the lower limit. By the display of the meter 11 being controlled in this manner, no mismatch occurs between display of the shift position and display of the virtual engine rotation speed. Further, the paddle shifter 23 is a momentary shifter, and thus, no mismatch occurs between a state of the paddle shifter 23 and the shift position by the automatic downshift. It is therefore possible to reduce a possibility that the driver who is used to the engine vehicle may feel a sense of discomfort by executing the automatic downshift.

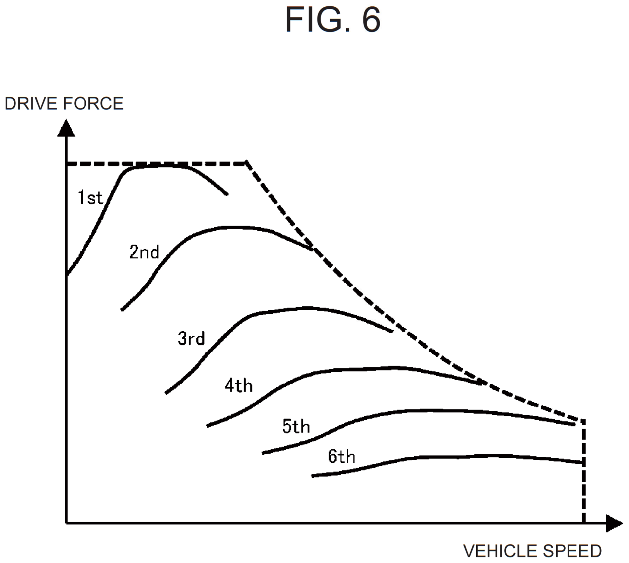

FIG. 6 is a view indicating a relationship between the vehicle speed and the drive force for each shift position to be implemented by the automatic downshift being executed in the manual operation mode. The electric motor 10 can generate torque even at a low speed, furthermore, even when the vehicle stops, and thus, when no limitation is imposed, there is no lower limits in vehicle speed ranges covered by the respective shift positions. However, by the automatic downshift being performed as described above, as indicated in FIG. 6, lower limits can be provided to the vehicle speed ranges that can be covered by the respective shift positions, and moreover, a higher lower limit can be set as the shift position advances. By this means, the vehicle speed-drive force characteristics for each shift position can be made closer to those of the engine vehicle, so that it is possible to reduce a possibility that the driver who is used to driving of the engine vehicle may feel a sense of discomfort for mismatch between the shift position and the vehicle speed. This enables the driver to obtain a sense as if he/she drove the engine vehicle with manual transmission.

### 6. Others

The shift control in the manual operation mode to be used in the battery electric vehicle of the present disclosure can be widely applied to battery electric vehicles having a manual operation mode configured to be able to switch output characteristics of a motor in multiple stages in accordance with operation of a momentary shifter like a paddle shifter, as well as being applied to the battery electric vehicle (BEV). For example, the shift control of the present disclosure can be applied to a hybrid electric vehicle (HEV) and a plug-in hybrid electric vehicle (PHEV) having a mode of traveling only with drive force of a motor. Further, the shift control of the present disclosure can be also applied to a fuel cell electric vehicle (FCEV) that supplies electric energy generated by a fuel cell to a motor.

## Claims

1. A battery electric vehicle (100) configured to be able to switch output characteristics of an electric motor in multiple stages, the battery electric vehicle comprising:
a processor (30) configured to switch the output characteristics in accordance with a shift position; and
a shifter (23) to be used by a driver to select the shift position, wherein:
the processor (30) has a manual operation mode of accepting selection of the shift position through manual operation of the shifter (23); and
the processor (30) is configured to automatically downshift the shift position in response to a vehicle speed or a motor rotation speed satisfying a predetermined condition during traveling in the manual operation mode.

2. The battery electric vehicle (100) according to claim 1,
wherein the processor (30) is configured to upshift the shift position only in accordance with the manual operation of the shifter (23) regardless of the vehicle speed and the motor rotation speed during traveling in the manual operation mode.

3. The battery electric vehicle (100) according to claim 1, wherein:
the manual operation mode includes a manual upshift mode and an automatic upshift mode; and
the processor (30) is configured to:
upshift the shift position only in accordance with the manual operation of the shifter (23) regardless of the vehicle speed and the motor rotation speed during traveling in the manual upshift mode; and
automatically upshift the shift position in response to the vehicle speed or the motor rotation speed satisfying a predetermined condition during traveling in the automatic upshift mode.

4. The battery electric vehicle (100) according to claim 3,
wherein the processor (30) is configured to perform switching between the manual upshift mode and the automatic upshift mode in response to selection by the driver.

5. The battery electric vehicle (100) according to claim 3 or 4, wherein:
the automatic upshift mode includes a first mode and a second mode; and
the processor (30) is configured to:
upon upshift in the first mode, complete upshift in a short period of time by setting a larger torque change rate than a torque change rate upon upshift in the second mode; and
upon upshift in the second mode, complete upshift while taking a longer time by setting a smaller torque change rate than a torque change rate upon upshift in the first mode.

6. The battery electric vehicle (100) according to claim 5,
wherein the processor (30) is configured to perform switching between the first mode and the second mode in response to selection by the driver.

7. A non-transitory storage medium that stores instructions, the instructions being executable by one or more processors and
causing the one or more processors to execute functions of:
switching output characteristics of an electric motor in multiple stages in accordance with a shift position;
making selectable, a manual operation mode of switching the shift position in accordance with manual operation of a shifter (23) by a driver in the battery electric vehicle (100); and
automatically downshifting the shift position in response to a vehicle speed or a motor rotation speed satisfying a predetermined condition during traveling in the manual operation mode.
